# EUROPEAN PATENT SPECIFICATION

(11) **EP 1 744 627 B1**
(45) Date of publication and mention of the grant of the patent: **08.07.2015**
(21) Application number: 05749565.7
(22) Date of filing: 04.05.2005
(51) Int. Cl.: A01N 47/40, A01P 7/04, A01N 25/00

(54) **COMPOSITION FOR CONTROL OF COCKROACHES**
SCHABENBEKÄMPFUNGSZUSAMMENSETZUNG
COMPOSITION POUR LE CONTRÔLE DES CAFARDS

(30) Priority: 10.05.2004 US 569796 P
(43) Date of publication of application: 24.01.2007
(73) Proprietor: Nippon Soda Co., Ltd., Tokyo 100-8165 (JP)
(72) Inventor: RICHMAN, Dina, L., Philadelphia, PA 19125 (US); BRYAN, Jeanne, Sparks, GA 31647 (US)
(74) Representative: Thom, Russell
(86) International application number: PCT/US2005/015495
(87) International publication number: WO 2005/110086

(56) References cited:
- JP-A- 2000 053 505
- US-A1- 2003 108 585
- Geoff Le Patourel: "Secondary transmission of fipronil toxicity between Oriental cockroaches Blatta orientalis L in arenas", Pest Management Science, 1 September 2000 (2000-09-01), pages 732-736, XP055128406, Chichester, UK DOI: 10.1002/1526-4998(200009)56:9<732::AID-PS2 06>3.0.CO;2-F Retrieved from the Internet: URL:http://onlinelibrary.wiley.com/doi/10. 1002/1526-4998(200009)56:9<732::AID-PS206> 3.0.CO;2-F/abstract
- Robert J Kopanic ET AL: "Coprophagy Facilitates Horizontal Transmission of Bait Among Cockroaches (Dictyoptera: Blattellidae)", Environmental Entomology, 1 June 1999 (1999-06-01), pages 431-431, XP055128396, Retrieved from the Internet: URL:http://www.ingentaconnect.com/content/ esa/envent/1999/00000028/00000003/art00012
- GAHLHOFF J E ET AL: "Secondary Kill of Adult Male German Cockroaches (Dictyoptera: Blattellidae) Via Cannibalism of Nymphs Fed Toxic Baits", JOURNAL OF ECONOMIC ENTOMOLOGY, ENTOMOLOGICAL SOCIETY OF AMERICA, LANDHAM, LANDHAM,MD,US, vol. 92, no. 5, 1 October 1999 (1999-10-01), pages 1133-1137, XP009179009, ISSN: 0022-0493

## Description

### FIELD OF THE INVENTION

The present invention relates generally to insecticidal compositions. In particular, it pertains to compositions of insecticides useful for control of cockroaches.

### BACKGROUND OF THE INVENTION

Cockroaches have the potential to cause nuisance or harm to persons and property. Cockroaches can appear in people's living environment at any place and at any time. They contaminate food and articles by way of contact and fecal droppings subjecting people to threats of bacteria and viruses. There are many types of cockroaches that require control; some examples are the German cockroach, American cockroach, Australian cockroach, Smokey-Brown cockroach and Oriental cockroach.

Insecticidal compositions have commonly been used to control cockroaches. Insecticidal compositions for the control of cockroaches may be broadly categorized as contact treatments (dusts, sprays, fogs, etc...) or bait treatments that require ingestion of the active ingredient (baits, gels, etc...). Of primary concern in developing an insecticidal composition that requires ingestion to control cockroaches are 'direct morality' rates as well as 'secondary mortality' rates. Direct mortality occurs when ingestion of the composition kills the cockroach. Secondary mortality occurs when the cockroach eats fecal deposits (coprophagy), a cockroach corpse (necrophagy), a live cockroach (cannibalism), reproductive remains (oothecae, unhatched eggs, or embryonic membranes), cockroach saliva or other cockroach emanations containing the insecticidal composition, all of which in turn kill the cockroach. A limited number of traditional insecticidal compositions used to control cockroaches have the ability to cause secondary mortality in any form. Some traditional insecticidal compositions cause secondary mortality mainly through coprophagy. Other traditional insecticidal compositions cause secondary mortality mainly through saliva transfer. No traditional insecticidal compositions cause multiple forms of secondary mortality. An insecticidal composition causing multiple forms of secondary mortality would have a significant advantage by increasing translocation of the insecticidal composition and its resultant effect on the cockroach population.

JP2000-53505A discloses an aqueous baiting agent including a neonicotinoid-based compound of certain formulae, and as necessary other ingredients.

### SUMMARY OF THE INVENTION

The composition of the present invention causes high direct mortality rates along with high secondary mortality rates through coprophagy, necrophagy, and cannibalism resulting in a very wide range of effect in controlling the cockroach population. The present invention is directed to a composition suitable for use in controlling cockroaches comprising a mixture of a bait matrix and acetamiprid. Other aspects of the present invention will also be apparent.

### DETAILED DESCRIPTION OF THE INVENTION

The present invention is directed to a composition suitable for use in controlling cockroaches comprising a mixture of a bait matrix and acetamiprid. The amount of acetamiprid present is in the range of 0.05% by weight to 0.5% by weight of all components in the total composition. The bait matrix is a sweet bait.

The present invention also provides a method for controlling cockroaches comprising applying the composition of the present invention to a locus where cockroach control is needed or expected to be needed. Cockroaches may be selected from the genera consisting of Periplaneta, Blattella and Blatta. Preferably, cockroaches are selected from the group consisting of German cockroach, American cockroach, Australian cockroach, Smokey-Brown cockroach and Oriental cockroach. The locus is selected from the group consisting of a cockroach-infested structure, a structure that is expected to be or become cockroach-infested and a location adjacent to such structures.

The compositions of the present invention may be derived either from technical grade or commercially available formulations of insecticides. For example, formulations of acetamiprid that are particularly useful in the context of the present invention include, without limitation, acetamiprid (sold under the names and trademarks of INTRUDER and ASSAIL), sold as a 70% wettable powder. Using methods known to one skilled in the art, the above-mentioned technical grade or commercially available formulations of insecticides can be dispersed in a bait matrix to provide a composition containing an insecticidally effective amount of the insecticide.

In the context of the present invention, the term "insecticide" refers to the active chemical compound or ingredient, such as acetamiprid, that kills insects such as cockroaches. The term "locus" refers to any locations where control of insects, such as cockroaches, is needed or expected to be needed. The term "direct mortality" refers to death of the insects, such as cockroaches, resulting from ingestion of the insecticide. The term "secondary mortality" refers to death of the insects, such as cockroaches, resulting from ingestion of fecal deposits (coprophagy), a cockroach corpse (necrophagy), a live cockroach (cannibalism), reproductive remains (oothecae, unhatched eggs, or embryonic membranes), or cockroach saliva containing an insecticide. The term "% by weight" refers to the weight of the insecticide or specified component as a percent of the total weight of the composition (e. g. including the bait matrix, other insecticides, surfactants, wetting agents, freeze/thaw agents and combinations thereof). The term "bait" or "bait matrix" refers to any edible or palatable substance that may contain a toxicant. The term "sweet bait" refers to any carbohydrate source such as sucrose, glucose or fructose that may contain a toxicant. The term "protein bait" refers to a plant protein source, such as peanut or soy, or an animal protein source, such as liver powder, that may contain a toxicant. The terms "mortality", "percent mortality", "control", "controlling" or "percent control" may be used interchangeably, and refer to the killing of cockroaches.

The following examples and comparisons further illustrate the present invention, but, of course, should not be construed as in any way limiting its scope. The examples set forth certain biological data illustrating the efficacy of the compositions of the present invention in controlling cockroaches. Unless otherwise indicated, all parts, percentages, and the like are by weight.

In the examples the following materials were used:
- 70% wettable powder of acetamiprid; commercially available as Intruder from Dupont;
- Sweet bait refers to a carbohydrate source such as sucrose, glucose or fructose;
- Protein bait refers to a plant protein source, such as peanut or soy, or a animal protein source such as liver powder;
- MAXFORCE FC fipronil and hydramethylnon is available from Bayer Environmental Science;
- Blank Matrix refers to cat food.

### EXAMPLE 1

### Direct Mortality Rates of German and American Cockroaches Exposed to a Sweet Bait and Acetamiprid Composition

The compositions of the present invention were prepared and tested for German cockroach and American cockroach activity in the following manner:
Test compositions made up of sweet bait matrix and a 70% wettable powder of acetamiprid in distilled water were prepared that provided appropriate rates of sweet bait and acetamiprid.

All cockroaches were laboratory-reared and starved for 24 hours before testing. Ten German cockroaches or 5 American cockroaches were added to plastic cups (340g (12 oz) with lids) coated with liquid Teflon to prevent escape. Four replicates of each treatment were tested. Bait was added to each cup along with water. Sweet baits containing 0% to 0.3% acetamiprid were evaluated. Cockroaches were held at 24° to 27°C (75° to 80° F) under ambient light regime throughout the duration of the test. Mortality was recorded through one week. The following results were obtained:

**Table 1**

| Direct Mortality Rates of German and American Cockroaches Exposed to a Sweet Bait and Acetamiprid Composition | | | | | | |
|---|---|---|---|---|---|---|
| | **Percent Mortality** | | | | | |
| **Sweet Bait +** | **German (n=40)** | | | **American (n=20)** | | |
| **% Acetamiprid** | **1 Day** | **2 Days** | **7 Days** | **1 Day** | **2 Days** | **7 Days** |
| 0% | 0 | 0 | 3 | 0 | 0 | 0 |
| 0.005% | 0 | 0 | 10 | 0 | 6 | 50 |
| 0.05% | 0 | 20 | 68 | 10 | 36 | 90 |
| 0.10% | 25 | 73 | 100 | 10 | 56 | 90 |
| 0.15% | 35 | 95 | 100 | 30 | 46 | 96 |
| 0.20% | 68 | 73 | 100 | 40 | 70 | 100 |
| 0.30% | 68 | 83 | 100 | 46 | 80 | 100 |

### COMPARATIVE EXAMPLE 2

### Direct Mortality Rates of German Cockroaches Exposed to a Protein Bait and Acetamiprid Composition

The compositions were prepared and tested for German cockroach activity in the following manner:
Test compositions made up of protein bait and a 70% wettable powder of acetamiprid in distilled water were prepared that provided appropriate rates of protein bait and acetamiprid.

All cockroaches were laboratory-reared and starved for 24 hours before testing. Ten cockroaches were added to plastic cups (340g (12 oz), with lids) coated with liquid Teflon to prevent escape. Three replicates of each treatment were tested. Bait was added to each cup along with water. Protein baits containing 0.15% to 0.5% acetamiprid were evaluated and compared to Maxforce FC fipronil (0.01 %) and hydramethylnon (2.15%) cockroach baits and blank screening matrix (Blank Matrix A). Cockroaches were held at 24° to 27°C (75° to 80°F) under ambient light regime throughout the duration of the test. Mortality was recorded through four days. The following results were obtained:

**Table 2**

| Direct Mortality Rates of German Cockroaches | | |
|---|---|---|
| | Mean % Mortality ± SEM* | |
| Protein Bait + % Acetamiprid | 1 day | 2 days |
| 0.15% | 33.3 ± 3.3 | 63.3 ± 12.0 |
| 0.20% | 58.7 ±11.3 | 81.0 ± 4.9 |
| 0.25% | 39.3 ± 5.8 | 77.7 ±7.9 |
| 0.30% | 70.0 ± 5.8 | 83.3 ± 3.3 |
| 0.35% | 80.0 ± 7.8 | 96.7 ± 3.3 |
| 0.40% | 53.3 ± 3.3 | 93.3 ± 6.7 |
| 0.45% | 61.0 ± 5.9 | 79.3 ± 9.7 |
| 0.50% | 73.3 ± 8.8 | 100 |
| Maxforce fipronil | 83.3 ± 8.8 | 93.3 ± 6.7 |
| Maxforce hydramethylnon | 0.0 | 0.0 |
| Blank Matrix A | 0.0 | 0.0 |

| | | |
|---|---|---|
| *SEM = Standard Error of the Mean | | |

### EXAMPLE 3

### Direct Mortality Rates of Oriental Cockroaches Exposed to Sweet Bait, Protein Bait and Acetamiprid Compositions

The compositions of the present invention and comparative protein bait compositions were prepared and tested for Oriental cockroach activity in the following manner:
Test compositions made up of protein or sweet bait and a 70% wettable powder of acetamiprid in distilled water were prepared that provided appropriate rates of acetamiprid.

All cockroaches were laboratory-reared and starved for 24 hours before testing. Ten cockroaches were added to plastic cups (340g (12 oz), with lids) coated with liquid Teflon to prevent escape. Three replicates of each treatment were tested. Bait was added to each cup along with water. Sweet bait containing 0.15% acetamiprid were evaluated and compared to blanks or controls of sweet bait and protein bait containing no acetamiprid, and protein baits containing 0.35% and 0.5% acetamiprid. Cockroaches were held at 24° to 27°C (75° to 80°F) under ambient light regime throughout the duration of the test. Mortality was recorded through ten days. The following results were obtained:

**Table 3**

| Direct Mortality Rates of Oriental Cockroaches | | | | | | | |
|---|---|---|---|---|---|---|---|
| | | **Mortality %** | | | | | |
| **Bait Type** | **Acetamiprid %** | **1 day** | **2 days** | **3 days** | **4 days** | **7 days** | **10 days** |
| Protein Bait | 0.5% | 100 | 100 | 100 | 100 | 100 | 100 |
| Protein Bait | 0.35% | 50 | 60 | 80 | 80 | 95 | 100 |
| Sweet Bait | 0.15% | 60 | 70 | 85 | 100 | 100 | 100 |
| Control Protein Bait | 0 | 0 | 0 | 0 | 0 | 0 | 5 |
| Control Sweet Bait | 0 | 0 | 0 | 0 | 0 | 0 | 0 |

### EXAMPLE 4

### Secondary Mortality Rates of German Cockroaches Exposed to Fecal Deposits (Coprophagy)

The compositions of the present invention were prepared and tested for German cockroach activity in the following manner:
Test compositions made up of bait matrix and a 70% wettable powder of acetamiprid in distilled water were prepared that provided appropriate rates of bait matrix and acetamiprid.

All cockroaches were laboratory-reared and starved for 24 hours before testing. Only water and harborage were available during that time. Ten German cockroaches were added to plastic cups (340g (12 oz) with lids) coated with liquid Teflon to prevent escape. Six replicates of each treatment were tested. Either Protein Bait containing 0.35% acetamiprid, Sweet Bait containing 0.15% acetamiprid, or a screening matrix (Blank Matrix) was added to each cup along with water. Insects were allowed to feed for five days so that fecal deposits and other emanations accumulated on the harborage and water container. After five days, cockroaches and food were removed from cups and ten naive male adults were introduced. These new cockroaches were not given fresh food, but had only the fresh water container and harborage used by the previous insects. Six additional replicates of cockroaches in cups offered either Blank Matrix or Sweet Bait containing 0.15% acetamiprid were used as controls. For insects fed Sweet Bait containing 0.15% acetamiprid, dead individuals were removed daily. Cockroaches were held at 24° to 27°C (75° to 80°F) under ambient light regime throughout the duration of the test. Mortality was recorded through 9 days. The following results were obtained:

**Table 4**

| Secondary Mortality Rates of German Cockroaches Exposed to Fecal Deposits (Coprophagy) | | | | | |
|---|---|---|---|---|---|
| | **Total % Mortality (n=60)** | | | | |
| **Treatment** | **1 day** | **2 days** | **5 days** | **7 days** | **9 days** |
| Acetamiprid Sweet Bait | 100 | --- | --- | --- | --- |
| Acetamiprid Protein Bait Droppings | 36.7 | 43.3 | 83.3 | 90.0 | 98.3 |
| Acetamiprid Sweet Bait Droppings | 85 | 96.7 | 100 | --- | --- |
| Blank Matrix* | 0 | 0 | 1.7 | 1.7 | 8.3 |
| Blank Matrix Droppings | 0 | 0 | 6.7 | 13.3 | 28.3 |

| | | | | | |
|---|---|---|---|---|---|
| * Matrix = cat food | | | | | |

### EXAMPLE 5

### Secondary Mortality Rates of German Cockroaches Exposed to Cockroach Corpses (Necrophagy)

The compositions of the present invention were prepared and tested for German cockroach activity in the following manner:
Test compositions made up of bait matrix and a 70% wettable powder of acetamiprid in distilled water were prepared that provided appropriate rates of bait matrix and acetamiprid.

All cockroaches were laboratory-reared and starved for 24 hours before testing. Only water and harborage were available during that time. Ten German cockroaches were added to plastic cups (340g (12 oz) with lids) coated with liquid Teflon to prevent escape. Six replicates of each treatment were tested. Either Sweet Bait containing 0.15% acetamiprid or a screening matrix (Blank Matrix) was added to each cup along with water. Insects were allowed to feed until those eating Sweet Bait containing 0.15% acetamiprid were moribund. At that time, 10 naive adult male cockroaches were introduced into cups containing the moribund cockroaches. These new cockroaches were not given fresh food. Also at the same time, insects fed Blank Matrix were decapitated and introduced to naive cockroaches. Six additional replicates of cockroaches in cups offered Blank Matrix were used as controls. Cockroaches were held at 24° to 27°C (75° to 80° F) under ambient light regime throughout the duration of the test. Mortality was recorded through 9 days. The following results were obtained:

**Table 5**

| Secondary Mortality Rates of German Cockroaches Exposed to Cockroach Corpses (Necrophagy) | | | | | |
|---|---|---|---|---|---|
| | **Total % Mortality (n=60)** | | | | |
| **Treatment** | **1 day** | **3 days** | **6 days** | **8 days** | **9 days** |
| Acetamiprid Sweet Bait Fed GCR | 35 | 66.7 | 90 | 93.3 | 95 |
| Blank Matrix* Fed GCR | 0 | 3.3 | 26.7 | 26.7 | 30 |
| Blank Matrix* | 0 | 5 | 5 | 5 | 5 |

| | | | | | |
|---|---|---|---|---|---|
| * Blank matrix = cat food | | | | | |

## Claims

1. A composition for use in controlling cockroaches comprising a mixture of i) a bait matrix and ii) acetamiprid, **characterised in that** the bait matrix is a sweet bait; and the amount of acetamiprid is in the range of 0.05% by weight to 0.5% by weight of all components in the total composition.

## Patentansprüche

1. Eine Zusammensetzung zur Verwendung bei der Bekämpfung von Schaben, beinhaltend eine Mischung aus i) einer Ködermatrix und ii) Acetamiprid, **dadurch gekennzeichnet, dass** die Ködermatrix ein süßer Köder ist; und die Menge an Acetamiprid in dem Bereich von 0,05 Gew.-% bis 0,5 Gew.-% aller Komponenten in der gesamten Zusammensetzung liegt.

## Revendications

1. Une composition pour son utilisation dans la lutte contre les cafards comprenant un mélange i) d'une matrice d'appât et ii) d'acétamipride, **caractérisée en ce que** la matrice d'appât est un appât sucré ; et la quantité d'acétamipride est comprise dans la gamme allant de 0,05 % en poids à 0,5 % en poids de tous les constituants dans la composition totale.
